Europäisches Patentamt

European Patent Office

Office européen des brevets

(19)

(11) **EP 0 855 817 A2**

(12) **EUROPÄISCHE PATENTANMELDUNG**

(43) Veröffentlichungstag:
   **29.07.1998   Patentblatt 1998/31**

(51) Int Cl.6: **H04L 12/403**, H04L 29/12

(21) Anmeldenummer: **98250016.7**

(22) Anmeldetag: **20.01.1998**

(84) Benannte Vertragsstaaten:
   **AT BE CH DE DK ES FI FR GB GR IE IT LI LU MC NL PT SE**
   Benannte Erstreckungsstaaten:
   **AL LT LV MK RO SI**

(30) Priorität: **22.01.1997   DE 19703721**

(71) Anmelder: **DeTeWe - Deutsche Telephonwerke Aktiengesellschaft & Co.**
   **10997 Berlin (DE)**

(72) Erfinder: **Huhn, Karl-Eckhardt**
   **13465 Berlin (DE)**

(54) **Verfahren zur Adressvergabe an gleichartige Module eines Kommunikationssystems**

(57)   Die Erfindung betrifft ein Verfahren zur Adreßvergabe an gleichartige Module eines Kommunikationssystems und zur Identifikation von defekten Modulen in einem linearen Netzwerk bei dem die Module aus einzelnen Stationen mit gleichartigen Koppelelementen bestehen, die durch Aneinanderreihen ein lineares Netzwerk bilden, wobei zum Aneinanderreihen ein lineares Vierdrahtübertragungssystem dient; die Koppelelemente sind vom Übertragungssystem auf ein Meßsystem umschaltbar und durch Unterteilung des Übertragungssystems in entkoppelte Übertragungsabschnitte und Umschalten auf das Meßsystem wird eine eineindeutige Adreßvergabe vorgenommen. Zu Beginn einer Initialisierungsphase werden eines der Module zu einer Master-Station bestimmt und sämtliche weiteren Module des linearen Netzwerkes als Slave-Stationen behandelt (Fig. 2).

FIG. 2

**Beschreibung**

Die Erfindung betrifft ein Verfahren zur Adreßvergabe an gleichartige Module eines Kommunikationssystems und zur Identifikation von defekten Modulen in einem linearen Netzwerk.

In der Kommunikationstechnik treten häufig Netzwerk-Konfigurationen auf, bei denen gleichartige Kommunikationsendpunkte (Stationen), wie z. B. Workstations, PCs oder Cluster-Controler für eine Vielzahl unterschiedlicher Endgeräte, wie z. B. Telefone oder Datenterminals, in ein lineares Übertragungssystem eingeschleift sind. Als lineares Übertragungssystem wird eine Aneinanderreihung von Stationen angesehen, von denen jede genau einen rechten und einen linken Nachbarn hat. An dem ggf. vorhandenen Enden des Übertragungssystems liegt dann jeweils nur eine Nachbarstation vor. Derartige Netze sind als LAN, Bus oder Ring bekannt.

Diese Kommunikationsendpunkte sind häufig identisch aufgebaut und müssen in einer Installations- und/oder Initialisierungsphase zur Unterscheidung mit einem eindeutigen Erkennungskriterium (Adresse) versehen werden, damit die auszutauschenden Nachrichten von der erzeugenden Quelle zum richtigen Ziel gelangen.

Häufig wird dabei eine sogenannte Master-Station ausgewählt, die diese Adressen verwaltet; die sogenannten Slave-Stationen können wegen ihrer anfänglichen Gleichheit aber zunächst von der Master-Station nicht angesprochen werden und müssen häufig durch manuelle Eingriffe vor Ort oder automatisch über eine am Anschlußort befindliche Hardware mit der Adreßinformation versorgt werden. Anschließend kann das Netzwerk dann regulär betrieben werden.

Aus wirtschaftlichen Gründen ist es zweckmäßig, den manuellen Vorgang der Adreßvergabe automatisch ablaufen und direkt von einer Master-Station aus steuern zu lassen. Dies ist inbesondere dann vorteilhaft, wenn eine große räumliche Ausdehnung des Netzes vorliegt oder aus einem großen Pool von Stationen eine beliebige Anzahl von individuellen Netzwerken aufgebaut werden sollen, die sich häufig wechselnden Bedürfnissen anpassen müssen. Letztere Forderung tritt z. B. bei der Zusammenstellung von Zügen durch Bahnbetreibern auf, deren Wagenpark mit einer modernen Kommunikationsausstattung ausgerüstet ist und deren Wagen nach täglich wechselnden Anforderungen zu Zügen gekoppelt werden müssen.

Derartige Anforderungen erzwingen eine hohe Flexibilität der Konfigurationsprogramme.

Häufig sind mit den physischen Adressen auch die den Stationen zugeordneten logischen Adressen, wie z. B. User-Name, Teilnehmerrufnummer sowie ggf. Privilegien, Paßwörter oder Berechtigungen zu vergeben. Diese werden z. B. auf Datenträgern oder durch manuelle Eingaben bereitgestellt und in das System eingespeist. Notwendig ist damit die Zuordnung von physischen und logischen Adressen.

Da die physischen und logischen Adressen für die gewählten Applikationen häufig wechseln können, wird ein Mechnismus benötigt, der einerseits beide Informationstypen einschließlich ihrer für die jeweiligen Konfigurationen gültigen Zuordnungen, z. B. ladbare Konfigurationsdatei, und andererseits die Möglichkeit der Überprüfung einer der beiden Informationstypen, wie z. B. Einlesen der physischen Adresse am Anschlußpunkt der jeweiligen Station, aus der realen Umgebung bereitstellt.

Dabei darf die physische Adresse weder verwechselt noch die eines gestörten Teils an andere Stationen vergeben werden, weil die logischen Adreßinformationen, wie z. B. Rufnummern, Paßwörter und Privilegien der physischen Adresse für die Dauer der Anwendung fest zugeordnet sind.

Um die richtige Konfiguration einstellen zu können, müssen die identischen Stationen aus ihrer direkten Umgebung die eineindeutige physische Adresse erhalten und selbsttätig einlesen. Es existieren eine Vielzahl von Möglichkeiten zur Adreßvergabe, z. B. ein einmaliges manuelles Einstellen einer eineindeutigen Adresse bei der Produktion z. B. mittels ROM/PROM oder bei der Installation über Verdrahtung, Auswahlschalter, Chipkarte oder ein manuelles Einstellen bei der Inbetriebnahme des Kommunikationssystems oder das Starten der Adreßvergabe von einer festgelegten Master-Station am Anfang oder Ende des Kommunikationssystems oder die Vergabe von Zufallszahlen, die als vorläufiges Unterscheidungsmerkmal zur Adressierung dient.

Allen Verfahren haften Nachteile an, die sich aus der sogenannten Nichtverlierbarkeit dieser Adresse über einen sehr langen Zeitraum, z. B. typisch 10 bis 20 Jahre, ergibt. So z. B. ein Defekt des Adreßelementes selbst und eine durch die Fehlerquelle "Mensch" bei der Wartung auftretende Fehleinstellung.

Der Erfindung lag daher die Aufgabe zugrunde, ein Verfahren zur Adreßvergabe anzugeben, das die genannten Nachteile vermeidet und das keine manuellen Eingriffe erfordert.

Diese Aufgabe ist durch die Erfindung gelöst, wie sie im Kennzeichnungsteil des ersten Patentanspruches dargelegt ist. Die Vorteile der Erfindung bestehen in einem automatischen Verfahren, das keine Betriebskostenerhöhungen bedingt. Es sind zudem keine speziellen Adreßelemente in der Umgebung der Stationen erforderlich und das Verfahren ist damit unabhängig von der verwendeten Technologie. Weiterhin sind keine physischen Adreßinformationen in den Systemteilen erforderlich, d. h. die Stationen sind bei jeder neuen applikationsbedingten Netzwerkeinbindung neutral bezüglich ihrer Adresse. Bei Wartung und Austausch kann somit keine Vertauschung vorkommen. Außerdem entfällt bei Wartung nach Defekten des lokalen Adreßelementes eine ggf.
verwaltungsintensive Ersatzbeschaffung, wie sie z. B.

bei dem Einsatz von Festwertspeichern notwendig ist.

Weitere vorteilhafte Maßnahmen sind Gegenstand der Unteransprüche.

Die Erfindung wird nachfolgend anhand einer aus fünf Figuren bestehenden Zeichnung näher erläutert. In der Zeichnung zeigen die

Fig. 1    ein schematisch dargestelltes lineares Netzwerk, die

Fig. 2    eine schematische Darstellung des linearen Übertragungs- und Meßsystems, die

Fig. 3    das Schaltbild eines Koppelelementes im aktiven Zustand, die

Fig. 4    den grundlegenden Meßkreis zur Feststellung passiver Stationen und die

Fig. 5    den Meßkreis bei einer passiven Station zwischen Koppelelement einer Master-Station und einer intakten Slave-Station.

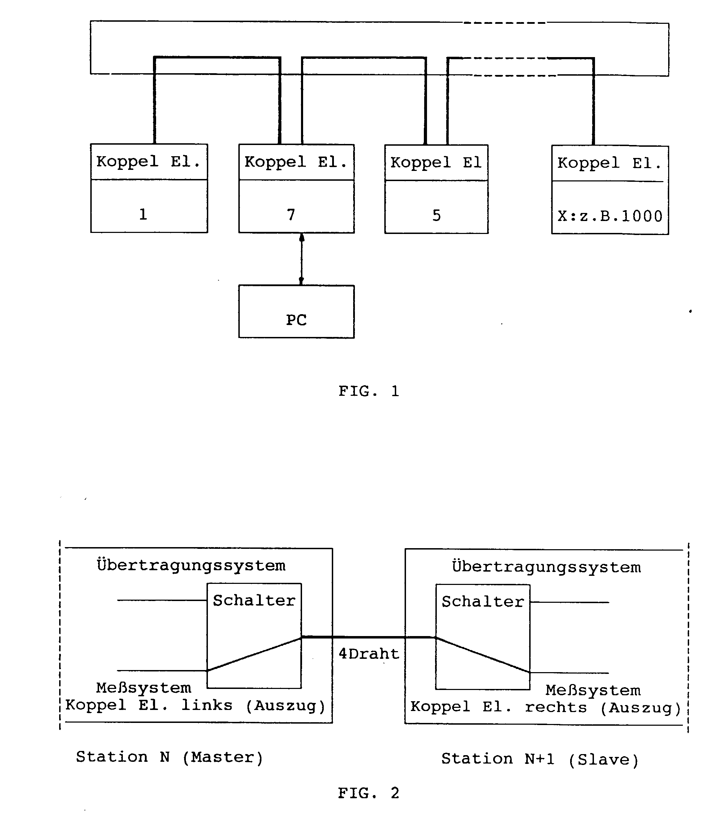

In der Figur 1 ist schematisch ein Netzwerk dargestellt, das aus X Stationen mit je einem Koppelelement besteht. Da in ein solches aus identischen Komponenten bestehendes System Zusatzinformationen eingegeben werden müssen, ist es von Vorteil, eine Master-Station zu bestimmen, indem eine Rechnereinheit, z. B. ein ortsfester PC oder tragbare externe Laptop/Notebooks, mit einer Station verbunden wird, die somit als Masterstation 7 fungiert. Über diesen Rechner kann dann per Eingabe über Tastatur, Touch-Screen, Diskette oder über einen Funkzugang die gewünschte Konfiguration mit allen Informationen, wie physische Adresse, und die identifizierenden Informationen, wie z. B. Rufnummern, Paßwörter, Privilegien, als Datensatz in die Master-Station 7 eingegeben werden.

Der Master-Station kann von der angeschalteten externen Rechnereinheit PC ihre physische Adresse mitgeteilt werden, jedoch kann sie die Slave-Stationen zunächst wegen derer Gleichheit nicht ansprechen.

Grundlage des Verfahrens einer automatischen Adreßvorgabe ist die Ausprägung des linearen Übertragungssystems, das die einzelnen Stationen verbindet.

Vorteilhaft ist die Verwendung von Übertragungssystemen, die aus zwei verdrillten Doppeladern (Vierdrahtsystem) bestehen, wie sie heute in vielen Hausverkabelungen installiert sind. Auf diesen Leitungen lassen sich abhängig von den verwendeten Leitungsträgern abschnittsweise Datenbitraten übertragen.

Der erfindungsgemäße Vorteil besteht in der Möglichkeit, ein oder zwei Doppeladern für Meßzwecke umzuschalten. Die Doppeladern können damit z. B. für eine kurze Meßzeit während des Systemhochlaufes einen galvanischen Meßweg zu allen angeschalteten aktiven und passiven Stationen zur Verfügung stellen, mit dem die gewünschte Prozedur der physischen Adreßvorgabe vorgenommen werden kann (Figur 2).

Da das System in entkoppelte Übertragungsabschnitte unterteilt ist, besteht die Möglichkeit, diese Messungen abschnittsweise vorzunehmen. Ist jedem Abschnitt genau eine Station zugeordnet, so kann mit der später beschriebenen Messung eine eineindeutige Adressenvergabe vorgenommen werden. Leitungsstörungen, wie z. B. Kurzschluß oder Leitungsbruch, können durch Dopplung des Übertragungssystems abgefangen werden.

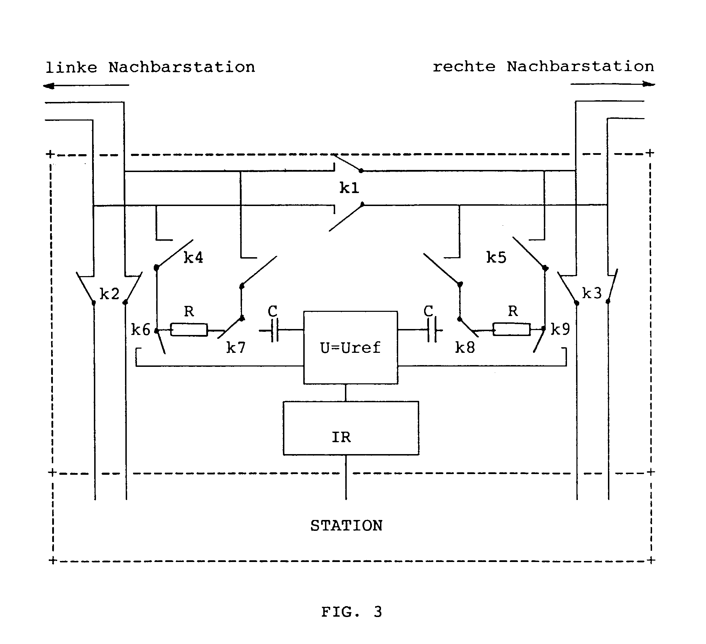

In der Figur 3 ist das Schaltbild eines Koppelelementes gezeigt, das jeder Station 1...X (Fig. 1) zugeordnet ist. Das Koppelelement hat die Aufgabe, je eine Station in das passive lineare Netzwerk einzuschleifen. Es ist derart ausgebildet, daß die Signalisierungsinformationen auf dem Übertragungsabschnitt zwischen jeweils zwei Koppelelementen über einen internen Rechner IR autonom bzw. auf Anweisung der Master-Station laufen. Alle intakten Koppelelemente nehmen nach Spannungsanlegen, gesteuert durch den zugeordneten internen Rechner IR, zunächst den aktiven Zustand ein. Bei Spannungsausfall oder einem Defekt in einer Station verbleiben deren Koppelelemente im passiven Zustand. Über durch den internen Rechner IR gesteuerte Schalter k1...k9 sind die eindeutig linke oder rechte Nachbarstation ansteuerbar. Die Koppelelemente sind zudem so ausgelegt, daß bei einer Störung oder einem Ausfall eines für die Kommunikation benötigten Elementes eine Überbrückung der gestörten Station geschaltet wird (passiver Zustand), indem die Schalter k1, k4 und k5 geschlossen und die Schalter k2 und k3 geöffnet sind. Diese Schaltungsvariante ist zugleich die Ruhelage jedes Koppelelementes.

Jedes Koppelelement bietet die Möglichkeit des Umschaltens zwischen dem Betriebszustand (aktiv oder passiv) und einem Meßzustand mittels der Schalter k6, k7 bzw. k8, k9. Hierzu wird ein physikalisches Element, z. B. ein Widerstand R, eingesetzt, um aus Messungen von alternativ Spannungen, Strömen oder Zeitintervallen zu ermitteln, ob und wieviele passive Stationen zwischen dem Koppelelement der Meßquelle und dem ersten aktiven Koppelelement liegen bzw. zum Aktivieren des nächst gelegenen Koppelelementes. Sind sämtliche Elemente einer Station in Ordnung und ist die Spannung vorhanden, so wird das Koppelelement vom passiven in den aktiven Zustand gesteuert und die entsprechende Station in das Netz eingeschleift.

Den einzelnen Stationen werden durch einfache Messung überprüfbare Metaadressen zugeordnet. Eine Metaadresse ist in diesem Zusammenhang ein Datum, das unabhängig von der aktuellen Applikation oder Konfiguration des linearen Netzwerkes bzw. Übertragungssystems vergeben wird und sich über die Dauer der jeweiligen konkreten Anwendungskonfiguration des Systems nicht ändert. Sie ist ein Datum, das aus einem beliebigen, aber lückenlosen Intervall von aufeinanderfolgenden Elementen, z. B. Zahlen, entnommen ist. Hierbei ist die Größe des Intervalls so bemessen, daß allen beteiligten Stationen ein eineindeutiges Element zugeordnet werden kann. Die Summe der verwendeten Metaadressen bildet ein universelles, einmalig zu definierendes "Meta-Adressen-Feld", dessen logische Werte durch einfache Meßalgorithmen von einer zentralen Stelle, z. B. der Master-Station, physisch überprüft werden können. Sind diese Adressen ermittelt und an die Stationen vergeben, so können mittels einer entsprechenden Konfigurationsdatei, die ebenfalls die Metaadressen beinhaltet, weitere identifizierende Daten zugeordnet werden.

Beispiele solcher Metaadressen sind Positionsnummern von Stationen innerhalb eines Netzwerkes, gezählt von z. B. einem Netzwerkende, oder die Positionsnummern eines Wagens innerhalb eines Zuges relativ zu seiner Lokomotive.

Die Master-Station wird bestimmt durch z. B. Ankoppeln einer Rechnereinheit und Einlesen der Metaadresse in die angekoppelte Station aus der angeschalteten Rechnereinheit. Eine solche Metaadresse kann z. B. die Positionsnummer dieser Station sein, die von einem Ende des linearen Netzwerkes aus gezählt wird. Zusätzlich erfolgt die Angabe dieser Zählrichtung. Diese Eingaben in die Steuerung der Master-Station werden von einem Eingabemedium, wie z. B. Tastatur, Diskette, Touch-Screen der Rechnereinheit oder über Funk von einem abgesetzten Server vorgenommen. Danach werden Metaadressen an alle Stationen, die sich relativ zu der beliebig posionierten Master-Station zu beiden Seiten innerhalb des Netzwerkes befinden, vergeben. Die Metaadressen für die Slave-Stationen können z. B. gebildet werden, indem von der Master-Station nach links fortschreitend aufeinanderfolgend ein konstanter Betrag dekrementiert wird und nach rechts fortschreitend aufeinanderfolgend ein konstanter Betrag inkrementiert wird. Im Fall, daß dieser konstante Betrag 1 beträgt und alle Stationen aktiv sind, entspricht die Metaadresse jeder Slave-Station ihrer Positionsnummer innerhalb des linearen Netzwerkes relativ zur Master-Station. Bei defekten oder passiven Stationen müssen entsprechende Korrekturen vorgenommen werden.

Wie bereits erwähnt, soll ein Messung Klarheit darüber bringen, ob und wieviele passive bzw. defekte Stationen zwischen der Meßquelle und dem ersten benachbarten aktiven Koppelelement liegen. Die Messung wird z. B. als Zeitmessung über die Ladezeit eines Kondensators ausgeführt, der je nach Betriebszustand des Systems über unterschiedliche Widerstandswerte aufgeladen wird. Ein Komparator stellt die Zeit TL fest, an der die Spannung U(t) am Ladekondensator einen vorgegebenen Wert Uref = U(TL) erreicht.

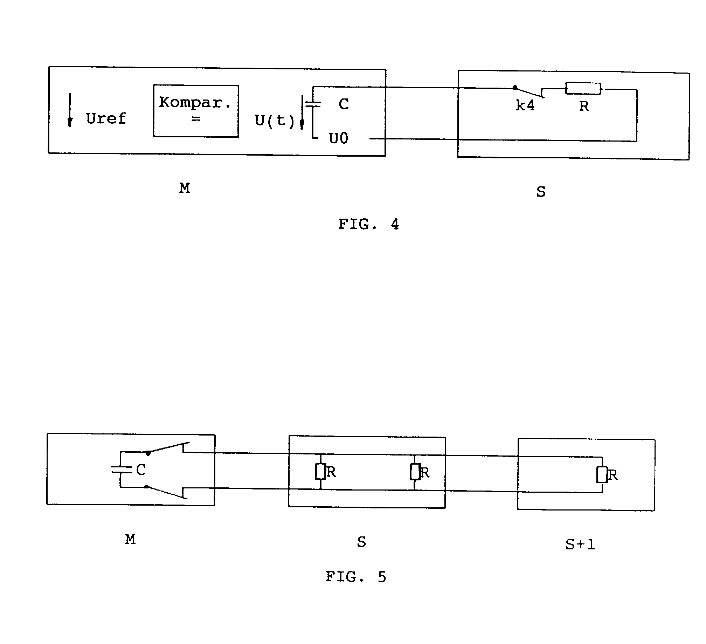

In der Figur 4 ist beispielhaft die RC-Zeitmessung dargestellt, wobei die geschlossenen Schalter k4, k5, k8, k9 aus der Figur 3 nur angedeutet sind.

Ist die direkt benachbarte Slave-Station S der Master-Station M intakt, so liegt ein Widerstand R im Meßkreis des Kondensators C des Koppelelementes der Master-Station M. Die Zeitkonstante t der Ladezeit TL ist somit

$$tref = R * C$$

und damit die Ladezeit

$$TL = tref * \ln [Uo/(Uo-Uref)].$$

Befindet sich zwischen dem Koppelelement der Master-Station M und der ersten intakten Slave-Station S+1 z. B. eine passive Slave-Station S, wie in Figur 5 dargestellt, so ergibt sich ein resultierender Ladewiderstand der Größe R/(2N+1) und damit wird die Ladezeitkonstante zu

$$t = tref/(2N+1)$$

und die Ladezeit

$$TL = tref/(2N+1) * \ln [Uo/(Uo-Uref)].$$

Damit ergibt sich für die Anzahl N der passiven oder defekten Slave-Stationen S zwischen dem Koppelelement der Master-Station M und dem ersten intakten Koppelelement einer Slave-Station S:

$$2N+1 = (tref/TL) * \ln [Uo/(Uo-Uref)]$$

$$2N = entier \{(tref/TL) * \ln [Uo/(Uo-Uref)]-1\}$$

mit z. B. Uref = 0,9 Uo und zur besseren Rundung einem Unschärfefaktor von (1-0,4) ergibt sich

$$2N = entier [(tref/TL) * 2,3-0,6]$$

für die Anzahl der passiven oder defekten Slave-Stationen.

Das Verfahren wird nachfolgend am Beispiel der Positionsnummer als Metaadresse beschrieben, wobei Nm die Positionsnummer der Master-Station und Ns die Positionsnummern der Slave-Stationen sind. Das Einlesen und Speichern der Positionsnummer Nm der Master-Station in die Koppelelemente der Slave-Stationen wird vom Koppelelement der Master-Station gestartet mit der Nummer Nm. Bei der Messung nach rechts mit Q defekten Modulen erhält dann die erste aktive Slave-Station rechts die Metaadresse Nsr = (Nm + Q + 1). Diese Metaadresse wird in beiden an der Messung aktiv beteiligten Koppelelementen gespeichert. Anschließend wird die Meßfunktion an das intakte benachbarte rechte Koppelelement mit der neuen Quasi-Master-Postionsnummer Nm = Nsr weitergegeben und eine erneute Messung durchgeführt bis das Ende in dieser Richtung erreicht ist, z. B. ist keine weitere intakte Slave-Station mehr vorhanden oder die Intervallgrenze ist überschritten.

Die Messung nach links bei M defekten Modulen wird entsprechend durchgeführt. Die erste aktive Slave-Station links erhält dann die Metaadresse Nsl = [Nm - (M + 1)]. Es folgt das Speichern dieser Metaadresse in beiden an der Messung aktiv beteiligten Koppelelementen, die Weitergabe der Meßfunktion an das intakte benachbarte linke Koppelelement mit der neuen Quasi-Master-Positionsnummer Nm = Nsl und die erneute Messung bis das Ende in dieser Richtung erreicht ist.

Somit wird während der Adreßvergabe die Meßfunktion in abund/oder aufsteigender Positionsfolge weitergereicht.

Die Messung liefert immer die Positionsnummer der Station, da sie sich aus der Anzahl der parallel geschalteten Meßwiderstände ergibt.

Werden pro Station mehr als eine Steuerung (Adresse) benötigt, so kann das Verfahren sinngemäß angewendet werden, wobei die Positionsnummer der Station übergeht in die Positionsnummer der Steuerung. Ist die Anzahl der Steuerungen (Adressen) pro Station K, wird die Metaadresse Nm der Master-Station ersetzt durch Nmk = K * Nm und der Ausdruck (M + 1) wird ersetzt durch K * (M + 1). Damit entsteht wiederum eine lückenlose Reihenfolge von Elementen, bezogen auf die Steuerungen (Adressen). Die Positionsnummern der Stationen können sich ergeben aus den Werten Nmk bei den Zahlen, die ohne Rest durch K teilbar sind (Nmkk). Sie entspricht damit der Adresse einer Steuerung. Es kann auch jede andere Zahl Nmy vergeben werden, die den folgenden Bedingungen genügt: Nmkk = Nmk + L, mit L als Element von NL [0-K].

Nach dieser Prozedur hat jede Station eine eineindeutige Metaadresse, z. B. ihre Positionsnummer innerhalb des Netzes. Die Stationen können unabhängig voneinander über das Netzwerk angesprochen werden. Sollten weitere identifizierende Daten, wie z. B. Rufnummer oder Paßwörter, zugeordnet werden, so kann dieses über ein geeignetes Mapping zu den Metaadressen, das der Master-Station bekanntgemacht wird, durchgeführt werden.

Das Verfahren kann in weiten Grenzen variiert werden. Als Beispiele für gleichstromdurchlässige Verkabelungen seien genannt: Das Vertauschen von Widerständen und Kondensatoren oder das Verwenden von Widerständen und Induktivitäten oder Strommessungen. Die Verwendung von passiven Bauelementen ist vorteilhaft, da die Messungen auch bei Spannungsausfall in gestörten Stationen funktionieren.

Da genaue Widerstände preiswerter als eng tolerierte Kondensatoren und Induktivitäten sind, ist es aus Gründen der Meßgenauigkeit und der Beeinflussung der Leitung im Betrieb günstig, die Messungen mit einem Meßkondensator oder einer Meßspule und verteilten, eng tolerierten Widerständen vorzunehmen.

## Patentansprüche

1. Verfahren zur Adreßvergabe an gleichartige Module eines Kommunikationssystems und zur Identifikation von defekten Modulen in einem linearen Netzwerk, dadurch gekennzeichnet, daß die Module aus einzelnen Stationen (1...X) mit gleichartigen Koppelelementen bestehen, die durch Aneinanderreihen ein lineares Netzwerk bilden, wobei zum Aneinanderreihen ein lineares Vierdrahtübertragungssystem dient, daß die Koppelelemente vom Übertragungssystem auf ein Meßsystem umschaltbar sind und daß durch Unterteilung des Übertragungssystems in entkoppelte Übertragungsabschnitte und Umschalten auf das Meßsystem eine eineindeutige Adreßvergabe vorgenommen wird.

2. Verfahren nach Anspruch 1, dadurch gekennzeichnet, daß zu Beginn einer Initialisierungsphase eines der Module zu einer Master-Station bestimmt wird, während sämtliche weiteren Module des linearen Netzwerkes als Slave-Stationen behandelt werden.

3. Verfahren nach Anspruch 1 und 2, dadurch gekennzeichnet, daß das Meßsystem auf dem Einsatz physikalischer Elemente basiert, mit deren Hilfe durch Spannungs- oder Strom- oder Zeitintervall-Messungen defekte Slave-Stationen identifiziert und intakte Slave-Stationen aktiviert werden.

4. Verfahren nach Anspruch 1 und 2, dadurch gekennzeichnet, daß als Adressen der einzelnen Slave-Stationen Metaadressen vergeben werden, wobei die Metaadresse unabhängig von der aktuellen Applikation oder Konfiguration des linearen Netzwerkes vergeben wird, die sich über die Dauer der konkreten Anwendungskonfiguration des Systems nicht ändert.

5. Verfahren nach Anspruch 4, dadurch gekennzeichnet, daß zusätzlich zu der Eingabe der Metaadressen die Zählrichtung eingegeben wird.

6. Verfahren nach Anspruch 1 bis 3, dadurch gekennzeichnet, daß als physikalische Elemente Meßkondensatoren und eng tolerierte Widerstände dienen und über die Ladezeit eines Kondensators eine Zeitmessung die defekten oder passiven Slave-Stationen zwischen der Master-Station und der ersten intakten Slave-Station bestimmt wird.

7. Verfahren nach Anspruch 1 bis 3 und 6, dadurch gekennzeichnet, daß als physikalische Elemente Induktivitäten und eng tolerierte Widerstände verwendet werden.

8. Verfahren nach Anspruch 1, 2, 4 und 5, dadurch gekennzeichnet, daß während der Adreßvergabe die Meßfunktion an die jeweils intakte nächste Slave-Station weitergegeben wird bis in ab- und/oder aufsteigender Positionsfolge das Netzwerkende erreicht ist.

| Koppel El. | Koppel El. | Koppel El | Koppel El. |
|:---:|:---:|:---:|:---:|
| 1 | 7 | 5 | X:z.B.1000 |

PC

FIG. 1

| Übertragungssystem | Übertragungssystem |
|---|---|
| Schalter | Schalter |
| 4Draht | |
| Meßsystem | Meßsystem |
| Koppel El. links (Auszug) | Koppel El. rechts (Auszug) |

Station N (Master)          Station N+1 (Slave)

FIG. 2

linke Nachbarstation
rechte Nachbarstation

FIG. 3

FIG. 4

FIG. 5